# EUROPÄISCHE PATENTSCHRIFT

(11) **EP 2 345 586 B1**
(45) Veröffentlichungstag und Bekanntmachung des Hinweises auf die Patenterteilung: **18.06.2014**
(21) Anmeldenummer: 11150871.9
(22) Anmeldetag: 13.01.2011
(51) Int. Cl.: B65B 59/00, B65B 9/02, B65B 53/02, B65B 61/00

(54) **Breitenverstellbare Verpackungsmaschine**
Width-variable packaging machine
Machine d'emballage réglable en largeur

(30) Priorität: 15.01.2010 DE 102010005069
(43) Veröffentlichungstag der Anmeldung: 20.07.2011
(73) Patentinhaber: Beck Packautomaten GmbH & Co. KG, 72636 Frickenhausen (DE)
(72) Erfinder: Gonser, Martin, 72636 Frickenhausen (DE)
(74) Vertreter: Witte, Weller & Partner Patentanwälte mbB

(56) Entgegenhaltungen:
- EP-A1- 0 872 423
- WO-A2-2007/084261
- DE-C1- 19 804 226
- DE-U1- 9 116 893

## Beschreibung

Die vorliegende Erfindung betrifft eine Verpackungsmaschine zum Verpacken eines Packguts mit einer Umverpackung, mit einer Transporteinrichtung zum Fördern des Packguts in einer Transportrichtung und mindestens einer Längsschweißeinrichtung zum Verschweißen der Umverpackung in der Transportrichtung, wobei eine Breitenposition der Längsschweißeinrichtung verstellbar ist, um eine Breite der Umverpackung einzustellen.

Eine derartige Verpackungsmaschine ist beispielsweise aus der Druckschrift DE G 91 16 893 U1 bekannt.

Verpackungsmaschinen werden in vielen industriellen Anwendungen zum Verpacken von unterschiedlichen Packgütern verwendet. Bei den Packgütern kann es sich um Konsumartikel wie beispielsweise Datenträger, Bücher oder übliche, in Supermärkten vertriebene Artikel handeln, aber auch um Sonderartikel wie beispielsweise Ersatzteile. Auch bei Zeitschriften mit Beiliegern oder im Bereich des Versandhandels finden Verpackungsmaschinen regelmäßig Anwendung.

Die vorliegende Erfindung beschäftigt sich in erster Linie mit Folienverpackungsmaschinen, bei denen grundsätzlich zwischen Formschultermaschinen, Serienpackmaschinen und Banderoliermaschinen unterschieden wird. Während Formschultermaschinen und Serienpackmaschinen dazu vorgesehen sind, ein Packgut vollständig in Folie einzuhüllen, wird mittels einer Banderoliermaschine lediglich eine Banderole um ein zu verpackendes Packgut gelegt.

Unter "Verpackungsmaschine" sind im Rahmen der vorliegenden Erfindung somit alle der voranstehend genannten Arten von Verpackungsmaschinen zu verstehen. Unter dem Begriff "Umverpackung" sind sowohl das Packgut vollständig einhüllende Folienverpackungen zu verstehen, die zum einen als Halbschläuche und zum anderen auch in Form von separaten Folien zugeführt werden können.

Allen Verpackungsmaschinen ist gemein, dass die Umverpackung an zumindest einer Seite verschweißt und abgetrennt werden muss. Für Banderolen ist dies in der Regel lediglich an einer Seite der Fall, bei Formschultermaschinen an drei Seiten und bei Serienpackmaschinen an allen vier Seiten des Packguts. Verpackungsmaschinen weisen daher stets eine sogenannte Quertrennschweißvorrichtung auf, die die Umverpackung quer zur Transportrichtung des Packguts in der Verpackungsmaschine verschweißt und zumindest teilweise durchtrennt. Des Weiteren weisen Verpackungsmaschinen Längsschweißvorrichtungen bzw. Längstrennschweißvorrichtungen auf, die die Umverpackung parallel zu der Transportrichtung des Packguts verschweißen und einen eventuell vorhandenen Folienüberstand abtrennen. Der Folienüberstand wird dann in der Regel mittels einer Folienrückführung aufgefangen und wiederverwertet.

[Verpackungsmaschinen sind nur selten für lediglich ein bestimmtes Packgut hergestellt. Üblicherweise sollen Verpackungsmaschinen dazu in der Lage sein, Packgüter unterschiedlicher Dimensionen verarbeiten zu können. Die Packgüter unterscheiden sich dabei zum einen in ihrer Breite und zum anderen in ihrer Höhe. Entsprechend wurde vorgeschlagen, die Längsschweißeinrichtung der Verpackungsmaschine verstellbar auszuführen, um die Verpackungsmaschine an unterschiedliche Packgüter anpassen zu können.

Bei Formschultermaschinen, die lediglich eine Formschulter sowie eine in ihrer Position festgelegte Längsschweißeinrichtung aufweisen, ist dabei lediglich die Formschulter relativ zu der Längsschweißeinrichtung bewegbar auszugestalten.

Die Druckschrift DE 198 04 226 C1 zeigt für eine Formschultermaschine ein Verfahren und eine Vorrichtung zum automatischen Nachjustieren einer Folienrolle aufgrund geänderter Packgutabmessungen, bei der eine endlose in Längsrichtung mittig gefaltete Folienbahn von einer Vorratsrolle quer zur Transportrichtung des Packguts abgewickelt, beim Zusammenführen mit dem Packgut auf einer Transportbahn mittels einer Umlenkeinrichtung in Transportrichtung umgelenkt und anschließend zumindest seitlich mit einer Seitenschweißeinrichtung verschweißt wird. Bei dem Verfahren wird bei Veränderung der Seitenschweißeinrichtung in der Höhe und/oder in der Breite relativ zur Transportbahn gegenüber der vorherigen Einstellung die Vorratsrolle in axialer Richtung mitbewegt. Die Vorrichtung zur Durchführung des Verfahrens weist ein Endlos-Kettenband auf, das mit der Seitenschweißeinrichtung und der Lagerung der Vorratsrolle verbunden ist und mittels entsprechender Umlenkrollen derart geführt ist, dass es aufgrund von Bewegungen der Seitenschweißeinrichtungen diese in axiale Bewegungen der Vorratsrolle umsetzt.

Bei Serienpackmaschinen, in denen zwei Längsschweißeinrichtungen vorgesehen sind, kann vorgesehen sein, dass eine Längsschweißvorrichtung festgelegt ist und die entsprechend andere Längsschweißvorrichtung bewegt wird, oder aber es kann vorgesehen sein, dass beide Längsschweißvorrichtungen symmetrisch zu einer Mittelebene bewegt werden. Da Serienpackmaschinen größtenteils symmetrisch zu dieser Mittelebene aufgebaut sind, wird regelmäßig die symmetrische Verschiebung beider Längsschweißeinrichtungen gewählt, um diese Symmetrie nicht aufgeben zu müssen.

Mittlerweile werden auch Führungen für das Packgut innerhalb der Verpackungsmaschine vorgesehen, die verhindern sollen, dass das Packgut seine Lage auf seinem Weg durch die Verpackungsmaschine ändert. Entsprechend sind bei einer Verstellung der Längschweißeinrichtungen auch die Führungen zu verstellen, um einen ordnungsgemäßen Transport der Packgüter sicherzustellen.

Eine einzelne Verstellung sowohl der Führungen als auch der Längsschweißeinrichtung ist dabei sehr aufwändig, da darauf geachtet werden muss, dass die Verstellwege einander entsprechen. Entsprechend ist man dazu übergegangen, die Verstellmechanismen sowohl der Führungen als auch der Längsschweißeinrichtung beispielsweise über eine Kette oder einen Riemen miteinander zu verbinden.

Abhängig von der Höhe eines zu verpackenden Packguts kann bei Verpackungsmaschinen auch vorgesehen sein, dass die Höhe der Längsschweißeinrichtung verstellbar ist. Bei Serienpackmaschinen besteht die Umverpackung aus einer oberen Folienbahn und einer unteren Folienbahn, die miteinander verschweißt werden. Entsprechend kann die Höhe der Längsschweißeinrichtung bspw. etwa der Hälfte des Packguts entsprechen, damit das Packgut in gleichem Maß von der oberen Folienbahn und der unteren Folienbahn bedeckt ist. So können die obere Folienbahn und die untere Folienbahn identisch ausgeführt sein. Wahlweise kann aber auch eine andere Aufteilung gewünscht sein.

Somit kann es auftreten, dass eine Längsschweißeinrichtung sowohl in ihrer Höhe als auch in ihrer Breite verstellbar ist. Dies kann jedoch zu Problemen führen, wenn die Breitenverstellung der Längsschweißeinrichtung noch mit einer Breitenverstellung einer Führung verbunden ist. Wird die Längsschweißeinrichtung in ihrer Höhe verstellt, ändert sich auch die notwendige Länge eines Ketten- oder Riemenelements, das die Breitenverstellung der Führung mit der Breitenverstellung der Längsschweißeinrichtung verbindet.

Da das Maß der Höhenverstellung relativ zu einem Abstand zwischen einer Führung und einer Längsschweißeinrichtung bei bekannten Verpackungsmaschinen relativ eher gering war, konnten diese Änderungen in der Länge des Riemenelements bisher vernachlässig werden.

Man ist jedoch bemüht, Verpackungsmaschinen heute möglichst kurz zu bauen, damit sie in Fertigungsstraßen möglichst wenig Platz einnehmen. Eine mögliche Änderung einer Höhenposition einer Längsschweißeinrichtung ist somit bezüglich der Konstruktion von Riemenelementen der Breitenverstellung nicht mehr vernachlässigbar.

Des Weiteren werden Packgüter in den Verpackungsmaschinen in der Regel auf Transportbändern transportiert. Üblicherweise liegen die Packgüter hierbei auf zwei Transportbändern auf. Die Transportbänder sind zusammen mit den Längsschweißeinrichtungen bezüglich einer Mittelebene verschiebbar, so dass sie auch auf Packgüter verschiedener Breite einstellbar sind.

Natürlich können die Transportbänder dabei nur so weit aneinander bewegt werden, bis sie aneinanderstoßen. Auf diese Weise wird bei herkömmlichen Verpackungsmaschinen die Mindestbreite eines Packguts etwa durch die doppelte Transportbandbreite bestimmt. Unter Umständen soll jedoch ein Packgut verpackt werden, das eine wesentlich geringere Breite aufweist. Wird ein solches Packgut dann verpackt, erhält man an den Längsseiten einen sehr großen Folienüberstand.

Es ist daher eine Aufgabe der Erfindung, eine verbesserte Breitenverstellung einer Verpackungsmaschine anzugeben.

Es wird daher vorgeschlagen, die eingangs genannte Verpackungsmaschine dahingehend weiterzubilden, dass eine Führung zum Führen des Packguts vorgesehen ist und eine Höhenposition der Längsschweißeinrichtung verstellbar ist, wobei die Breitenposition der Längsschweißeinrichtung und eine Breitenposition der Führung mittels einer gemeinsamen Betätigungseinrichtung verstellbar sind, wobei die Betätigungseinrichtung ein Endloselement aufweist, das über ein Umlenkelement geführt ist, und wobei eine Position des Umlenkelements mit der Höhenposition der Längsschweißeinrichtung gekoppelt ist, die Breitenposition der Führung mittels einer ersten Spindel und die Breitenposition der Längsschweißeinrichtung mittels einer zweiten Spindel verstellbar ist, wobei das Endloselement die erste und die zweite Spindel verbindet.

Eine Spindel stellt einen konstruktiv robusten Aufbau für eine Einrichtung zur Verstellung einer Breitenposition sowohl der Führung als auch der Längsschweißeinrichtung bereit. Zudem können eine Spindel der Führung und eine Spindel der Längsschweißeinrichtung sehr einfach mittels des Endloselements verbunden werden.

Des Weiteren ist die Position des Umlenkelements mit der Höhenposition der Längsschweißeinrichtung mittels eines L-förmigen Hebels mechanisch gekoppelt ist.

Ein L-förmiger Hebel stellt eine mechanisch einfache Möglichkeit bereit, eine vertikale Bewegung, d.h. beispielsweise die Änderung der Höhenposition der Längsschweißeinrichtung, mit einer horizontalen Position, d.h. beispielsweise einer Veränderung der Position des Umlenkelements, zu koppeln.

Bisher wurde ein Endloselement vorgesehen, das einen Verstellmechanismus der Führung und einen Verstellmechanismus der Längsschweißeinrichtung direkt miteinander verbindet. Demgegenüber wird erfindungsgemäß noch ein Umlenkelement vorgeschlagen, dessen Position mit der Höhenposition der Längsschweißeinrichtung gekoppelt ist. Die Position des Umlenkelements ist somit ebenfalls verschiebbar. Mittels einer geeigneten Kopplung ist es somit möglich, bei einer Änderung der Höhenposition der Längsschweißeinrichtung auch die Position des Umlenkelements zu ändern und so den Verlauf des Endloselements zu variieren bzw. die Spannung des Endloselements einzustellen und aufrechtzuerhalten.

Auf diese Weise wird eine gemeinsame Breitenverstellung der Führung und der Längsschweißeinrichtung auch bei Verpackungsmaschinen mit verkürzter Baulänge und höhenverstellbarer Längsschweißeinrichtung ermöglicht.

Die eingangs gestellte Aufgabe wird somit vollkommen gelöst.

Es kann daher vorgesehen sein, dass die Betätigungseinrichtung ein manuell betätigbares Kurbelelement aufweist.

Auf diese Weise wird es einfach möglich, mittels des Kurbelelements sowohl die Führung als auch die Längsschweißeinrichtung in ihrer Breitenposition zu verstellen. Selbstverständlich kann sowohl kumulativ als auch alternativ ein Antrieb bzw. eine automatische Verstellung der Breitenposition bzw. Betätigung der ersten Spindel und der zweiten Spindel vorgesehen sein.

Des Weiteren kann vorgesehen sein, dass das Endloselement über die erste Spindel, die zweite Spindel, ein erstes Paar von Umlenkrollen und ein zweites Paar von Umlenkrollen U-förmig umläuft, wobei das erste Paar von Umlenkrollen das Umlenkelement bildet, und die Position des ersten Paars von Umlenkrollen mit der Höhenposition der Längsschweißeinrichtung gekoppelt ist.

Ein U-förmiger Verlauf des Endloselements ermöglicht es, das Endloselement in vertikaler Richtung, d.h. parallel zu einer Höhenposition der Längsschweißeinrichtung der zweiten Spindel der Längsschweißeinrichtung zuzuführen. Bei einer Verstellung der Höhenposition der Längsschweißeinrichtung ändert sich somit die Richtung der Zuführung des Endlosriemens auf die zweite Spindel nicht. Gleichwohl kann mittels der Kopplung des ersten Paars von Umlenkrollen sichergestellt werden, dass auch bei einer Änderung der Höhenposition eine Gesamtumlauflänge des Endloselements gleich bleibt.

Dabei kann vorgesehen sein, dass das zweite Paar von Umlenkrollen in seiner Position festgelegt ist.

Grundsätzlich genügt es, wenn ein Paar von Umlenkrollen in seiner Position mit der Höhenposition der Längsschweißeinrichtung gekoppelt ist. Es können zwar grundsätzlich auch mehrere Umlenkelemente mit der Höhenposition in Längsschweißeinrichtung gekoppelt sein, für einen konstruktiv einfachen Aufbau genügt es jedoch, wenn lediglich ein Umlenkelement bzw. ein Paar von Umlenkrollen bereitgestellt ist, das entsprechend gekoppelt ist.

Besonders bevorzugt ist es, wenn die Transporteinrichtung ein erstes Umlaufelement und mindestens ein zweites Umlaufelement aufweist, wobei das zweite Umlaufelement aus einer Betriebsposition in eine Parkposition bewegbar ist, so dass das Packgut in der Betriebsposition von sowohl dem ersten als auch dem mindestens einen zweiten Umlaufelement gefördert ist und in der Parkposition das Packgut lediglich von dem ersten Umlaufelement gefördert ist.

Diese Ausführungsform wird unabhängig von der Ausgestaltung der Verpackungsmaschine als eigene Erfindung angesehen, also auch in Kombination mit Verpackungsmaschinen, bei denen kein Umlenkelement vorgesehen ist, dessen Position mit der Höhenposition der Längsschweißeinrichtung gekoppelt ist.

Auf diese Weise wird eine Möglichkeit bereitgestellt, eines der beiden Umlaufelemente in eine Parkposition zu bewegen, so dass die Längsschweißeinrichtungen näher zusammengeschoben werden können, nämlich beide unmittelbar neben das erste Umlaufelement. Somit können auch Packgüter, deren Breite lediglich der eines einzelnen Umlaufelements entspricht, mit geringem Folienüberstand in der gewohnten Qualität verpackt werden.

In einer bevorzugten Weiterbildung kann vorgesehen sein, dass das zweite Umlaufelement teleskopartig ausgebildet ist.

Auf diese Weise wird es möglich, das zweite Umlaufelement ineinanderzuschieben, um seine Baulänge zu verkürzen. Auf diese Weise wird es einfacher möglich, das zweite Umlaufelement in seiner Parkposition zu verbringen, ohne dass dafür andere Bauelemente der Verpackungsmaschine bewegt werden müssen.

Dabei kann vorgesehen sein, dass das zweite Umlaufelement über mindestens vier Rollenelemente geführt ist, wobei mindestens zwei der mindestens vier Rollenelemente gemeinsam verschiebbar sind, so dass eine Verkürzung eines Trums des zweiten Umlaufelements eine Verlängerung eines weiteren Trums des zweiten Umlaufelements bewirkt.

Auf diese Weise wird vermieden, dass ein Band bzw. eine Kette oder ähnliches des zweiten Umlaufelements durchhängt, wenn das zweite Umlaufelement teleskopartig zusammengeschoben wird. Die Umlauflänge des zweiten Umlaufelements bleibt stets gleich.

Des Weiteren kann vorgesehen sein, dass zwei Längsschweißeinrichtungen vorgesehen sind und das zweite Umlaufelement senkrecht zu der Transportrichtung aus der Betriebsposition in die Parkposition bewegbar ist, wobei die Betriebsposition zwischen den Längsschweißeinrichtungen angeordnet ist und die Parkposition außerhalb der zwei Längsschweißeinrichtungen angeordnet ist.

Die Begriffe "außerhalb" und "innerhalb" verstehen sich dabei in Bezug auf eine Mittelebene, bezüglich der die zwei Längsschweißeinrichtungen symmetrisch ausgerichtet sind. "Innerhalb" liegt somit der Raum, der auch diese Mittelebene umfasst. "Außerhalb" liegt der Raum, in dem die Mittelebene nicht liegt und in dem auch kein Packgut transportiert wird.

Eine Verschiebbarkeit des zweiten Umlaufelements senkrecht zu der Transportrichtung stellt eine besonders einfache Möglichkeit dar, das zweite Umlaufelement zu bewegen. Insofern können die notwendigen Handgriffe einem Bedienpersonal ohne besondere Fachkenntnisse durchgeführt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine schematische Ansicht der Bauelemente einer Verpackungsmaschine,
Fig. 2 eine Seitenansicht einer erfindungsgemäßen Ausführungsform einer Breitenverstellung,
Fig. 3 eine Oberansicht einer Transporteinrichtung einer Verpackungsmaschine, wobei sich ein Umlaufelement in einer Betriebsposition befindet,
Fig. 4 eine Oberansicht einer Transporteinrichtung einer Verpackungsmaschine, wobei sich ein Umlaufelement in einer Parkposition befindet,
Fig. 5 eine Seitenansicht der Betriebsposition des Umlaufelements in Fig. 3, wobei sich eine Längsschweißeinrichtung in einer ersten Höhe befindet, und
Fig. 6 eine Seitenansicht der Parkposition des Umlaufelements in Fig. 4, wobei sich die Längsschweißeinrichtung in einer zweiten Höhe befindet.

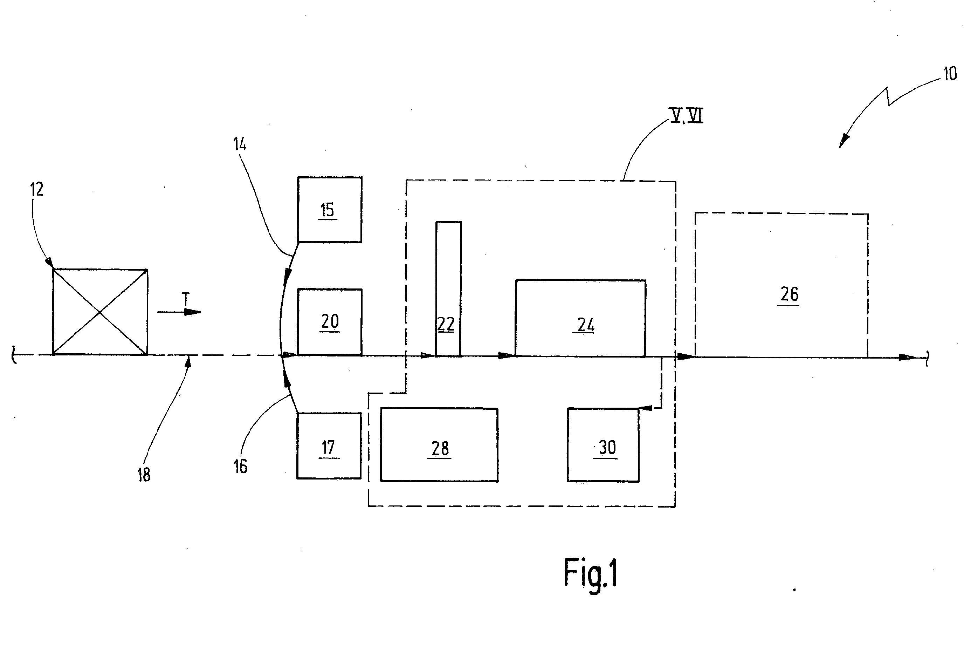

Fig. 1 zeigt eine schematische Ansicht einer Verpackungsmaschine 10. Die Verpackungsmaschine 10 soll im Folgenden am Beispiel einer Serienpackmaschine beschrieben werden, in der die Erfindung beispielsweise, aber nicht ausschließlich, eingesetzt werden kann.

Die Verpackungsmaschine 10 dient dazu, ein Packgut 12 mit einer Umverpackung zu versehen. Die Umverpackung besteht aus einer oberen Folienbahn 14 und einer unteren Folienbahn 16, die um das Packgut 12 herumgelegt und miteinander verschweißt werden.

Die obere Folienbahn 14 wird mittels einer oberen Folienzuführung 15 zugeführt und die untere Folienbahn 16 wird mittels einer unteren Folienzuführung 17 zugeführt.

Die obere Folienbahn 14 und die untere Folienbahn 16 laufen in einer Folienebene 18 zusammen, in der sie durch die Verpackungsmaschine 10 transportiert und verarbeitet werden. Die Folienebene 18 kann diejenige Ebene sein, in der beispielsweise eine Transporteinrichtung zum Fördern des Packguts 12 angeordnet ist, die Folienebene 18 kann jedoch auch beispielsweise auf halber Höhe des Packguts 12 vorgesehen sein. Insbesondere kann die Folienebene 18 in ihrer Höhe verstellbar sein.

Das Packgut 12 wird durch die Verpackungsmaschine 10 in einer Transportrichtung T gefördert. Dabei läuft das Packgut 12 zunächst in die obere Folienbahn 14 und die untere Folienbahn 16 ein und wird darauffolgend durch eine Querspannungseinrichtung 20 geführt. Die Querspannungseinrichtung 20 dient dazu, die obere Folienbahn 14 und die untere Folienbahn 16 in einer Richtung quer zu der Transportrichtung T zu spannen, um eventuell in den Folienbahnen 14, 16 vorhandene Faltenwürfe zu beseitigen. Darauffolgend fährt das Packgut 12 mit den vorgespannten Folien 14, 16 in eine Quertrennschweißeinrichtung 22 ein, die üblicherweise einen Ober- und einen Unterstempel aufweist. Die Quertrennschweißeinrichtung dient dazu, die Folien 14, 16 in einer Richtung quer zu der Transportrichtung T zumindest teilweise zu durchtrennen und miteinander zu verschweißen. Üblicherweise ist dazu in der Quertrennschweißeinrichtung 22 ein beheiztes Messer oder ein beheizter Draht vorgesehen, der die Folien 14, 16 durchtrennt und miteinander verschweißt.

Bei der Verarbeitung wird zunächst eine in Transportrichtung T weisende Seite des Packguts 12 verschweißt. Darauffolgend durchfährt das Packgut 12 eine Längsschweißeinrichtung 24, die bei einer Serienpackmaschine zu beiden Seiten des Packguts 12 angeordnet ist. Die Folienbahnen 14, 16 werden in der Längsschweißeinrichtung 24 zu beiden Längsseiten des Packguts 12 miteinander verschweißt und ein eventuell vorhandener Folienüberstand wird abgetrennt. Das Packgut 12 ist dann an drei Seiten verschweißt. Letztlich wird mittels der Quertrennschweißeinrichtung 22 dann eine entgegengesetzt zu der Transportrichtung T weisende Seite des Packguts 12 verschweißt und die Folienbahnen 14, 16 durchtrennt. Das Packgut 12 ist dann vollständig von den Folienbahnen 14, 16 umgeben und an allen vier Seiten verschweißt. Es kann vorgesehen sein, dass das Packgut 12 dann in einen Schrumpftunnel 26 einläuft, in dem die Folienbahnen 14, 16, die die Umverpackung bilden, auf das Packgut 12 mittels einer geeigneten Wärmebehandlung aufgeschrumpft werden.

Die Verpackungsmaschine 10 weist Verstelleinrichtungen 28 auf, die dazu dienen, die Verpackungsmaschine 10 auf eine Höhe und eine Breite des Packguts 12 einzustellen. Die Ausgestaltung der Verstelleinrichtungen 28 wird im Folgenden näher erläutert werden. Des Weiteren ist eine Folienrückführung 30 vorgesehen, die dazu dient, den in der Längsschweißeinrichtung 24 abgetrennten Folienüberstand aufzunehmen, damit dieser wiederverwertet werden kann.

Um eine möglichst kompakte Bauweise der Verpackungsmaschine 10 in Bezug auf ihre axiale Länge, d.h. in Transportrichtung T, zu erreichen, ist insbesondere vorgesehen, dass die Folienrückführung 30 unterhalb der Längsschweißeinrichtung 24 angeordnet ist. Des Weiteren sind die obere Folienzuführung 15 und die untere Folienzuführung 17 nahe an die Quertrennschweißeinrichtung 22 herangerückt, so dass sie sich in etwa oberhalb bzw. unterhalb der Querspannungseinrichtung 20 befinden.

Es kann vorgesehen sein, dass sich Elemente der Querspannungseinrichtung 20 auch an anderen Punkten der Verpackungsmaschine 10 wiederfinden. Beispielsweise kann vorgesehen sein, dass auch in der Längsschweißeinrichtung 24 Elemente zur Querspannung der Folienbahnen 14, 16 vorgesehen sind. Des Weiteren kann die Abfolge der Schweißeinrichtungen variiert werden. Beispielsweise kann vorgesehen sein, dass die Quertrennschweißvorrichtung 22 nach der Längsschweißeinrichtung 24 angeordnet ist.

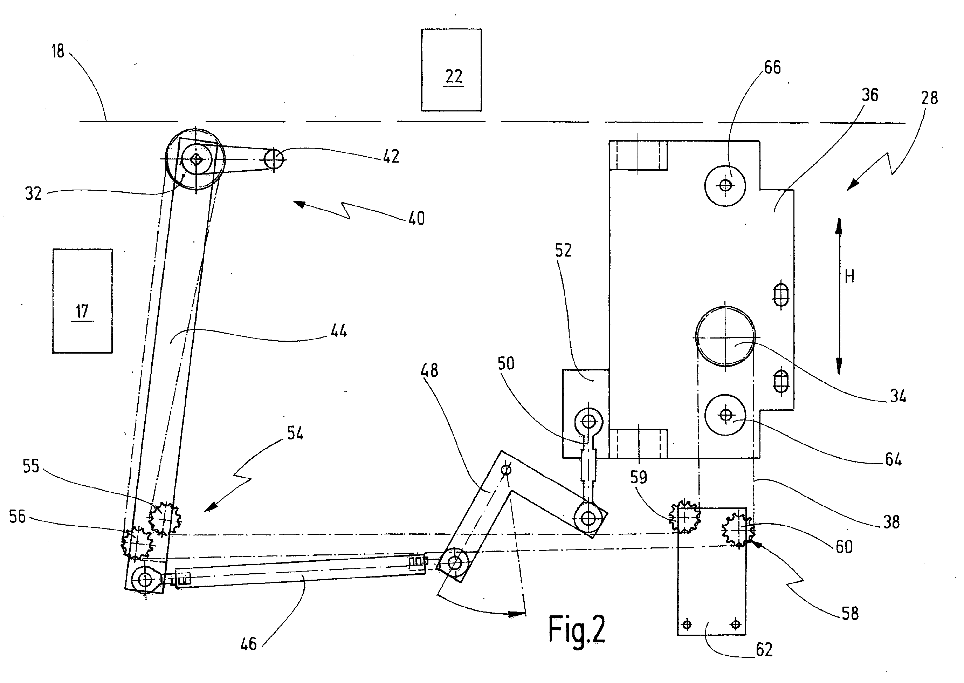

Fig. 2 zeigt Elemente der Verstelleinrichtung 28 in einer Seitenansicht. Die Längsschweißeinrichtung 24 der Verpackungsmaschine 10 ist in einer Höhenposition H verstellbar. Hierzu verwendbare Mechanismen sind dem Fachmann bekannt und in der Ansicht in Fig. 2 nicht näher dargestellt. Fig. 2 zeigt lediglich die Elemente der Verstelleinrichtung 28, die dazu vorgesehen sind, eine Breitenposition der Längsschweißeinrichtung 24 einzustellen.

Die dargestellten Elemente der Verstelleinrichtung 28 befinden sich unterhalb der Transportebene 18 in etwa auf Höhe der Quertrennschweißeinrichtung 22. Bezüglich der Transportrichtung T "stromauf" schließt sich unmittelbar die untere Folienzuführung 17 an.

Die Verstelleinrichtung 28 weist eine erste Spindel 32 auf, die dazu vorgesehen ist, eine Breitenposition einer Führung einzustellen, die dazu dient, das Packgut sicher durch die Verpackungsmaschine zu führen, insbesondere um sicherzustellen, dass das Packgut 12 in der vorgesehenen Orientierung in die Längsschweißeinrichtung 24 einläuft.

Des Weiteren ist eine zweite Spindel 34 vorgesehen, die entsprechend dazu dient, eine Breitenposition der Längsschweißeinrichtung 24 einzustellen. Die Spindel 34 ist dazu an einem Plattenelement 36 befestigt. Das Plattenelement 36 ist in seiner Höhenposition verstellbar, jedoch in seiner Breitenposition festgelegt.

Es ist eine Betätigungseinrichtung 40 vorgesehen, die dazu dient, sowohl die erste Spindel 32 als auch die zweite Spindel 34 gemeinsam zu betätigen, damit sowohl die Führung als auch die Längsschweißeinrichtung 24 gemeinsam verstellt werden können.

An der ersten Spindel 32 ist ein erstes Hebelelement 44 schwenkbar angelenkt, das an einem der ersten Spindel 32 entgegengesetzten Ende mit einem ersten Stangenelement 46 drehbar verbunden ist. Über das Stangenelement 46 ist das erste Hebelelement 44 mit einem L-förmigen Hebel 48 verbunden. Der L-förmige Hebel 48 ist um einen Drehpunkt 49 schwenkbar gelagert, so dass der L-förmige Hebel 48 um einen Schwenkwinkel α schwenkbar ist. Während ein Schenkel des L-förmigen Hebels mit dem ersten Stangenelement 46 verbunden ist, ist ein entsprechend anderer Schenkel des L-förmigen Hebels mit einem zweiten Stangenelement 50 verbunden. Über das zweite Stangenelement 50 ist der L-förmige Hebel 48 mit einem Befestigungsabschnitt 52 verbunden, der ein Teil des Plattenelements 36 ist.

Wird das Plattenelement in seiner Höhenposition H verstellt, wird auch der Befestigungsabschnitt 52 in seiner Höhenposition H verstellt. Wird die Höhenposition H erhöht, d.h. in der in Fig. 2 dargestellten Ansicht das Plattenelement 36 nach oben bewegt, zieht der Befestigungsabschnitt 52 an dem zweiten Stangenelement 50 und damit an dem L-förmigen Hebelelement 48. Das L-förmige Hebelelement 48 schwenkt somit entgegengesetzt zum Uhrzeigersinn in der in Fig. 2 dargestellten Ansicht um den Drehpunkt 49, so dass das erste Stangenelement 46 in der in Fig. 2 dargestellten Ansicht nach rechts bewegt wird. Des Weiteren verschwenkt auch das erste Hebelelement 44 entgegengesetzt zum Uhrzeigersinn.

An dem ersten Hebelelement 44 ist ein erstes Umlenkelement 54 vorgesehen. Das erste Umlenkelement 54 weist Umlenkrollen 55, 56 auf. Des Weiteren ist ein zweites Umlenkelement 58 vorgesehen, das ebenfalls zwei Umlenkrollen 59, 60 aufweist.

Das Endloselement 38 ist um die erste Spindel 32, die Umlenkrollen 55, 56 sowie die Umlenkrollen 59, 60 und die zweite Spindel 34 geführt. Das Endloselement 38 verläuft somit U-förmig. Ein waagerechter Schenkel des U wird dabei von den Trums zwischen dem ersten Umlenkelement 54 und dem zweiten Umlenkelement 58 gebildet, wobei die vertikalen Schenkel des U von den Trums zwischen dem ersten Umlenkelement 54 und der ersten Spindel 32 bzw. dem zweiten Umlenkelement 58 und der zweiten Spindel 34 gebildet sind.

Wird die Höhenposition H der zweiten Spindel 34 verändert, ändert sich folglich auch die Umlauflänge des Endloselements 38. Um dieses auszugleichen, ist das erste Umlenkelement 58 mit den Umlenkrollen 59, 60 an einer Befestigungsplatte 62 festgelegt, wohingegen das erste Umlenkelement 54 mit den Umlenkrollen 55, 60 an dem ersten Hebelelement 44 festgelegt ist. Die Umlenkrollen 55, 60 können somit zusammen mit dem ersten Hebelelement 44 verschwenken.

Wird die Höhenposition H der zweiten Spindel 34 erhöht (nach oben in Fig. 2), schwenkt das erste Hebelelement mit den Umlenkrollen 55, 60 folglich nach rechts. Der Abstand zwischen dem ersten Umlenkelement 54 und dem zweiten Umlenkelement 58 wird dadurch verkürzt. Somit kann erreicht werden, dass die Gesamtumlauflänge des Endloselements 38 gleich bleibt. Entsprechend schwenkt das erste Hebelelement 44 nach links und der Abstand zwischen dem ersten Umlenkelement 54 und dem zweiten Umlenkelement 58 vergrößert sich, wenn die Höhenposition H des Plattenelements 36 bzw. der zweiten Spindel 34 verringert wird (in Fig. 2 nach unten).

Auf diese Weise ist es möglich, auch bei einer höhenverstellbaren zweiten Spindel 34 sowohl die erste Spindel 32 als auch die zweite Spindel 34 bzw. das Plattenelement 36 gemeinsam mittels des Kurbelelements 42 zu betätigen.

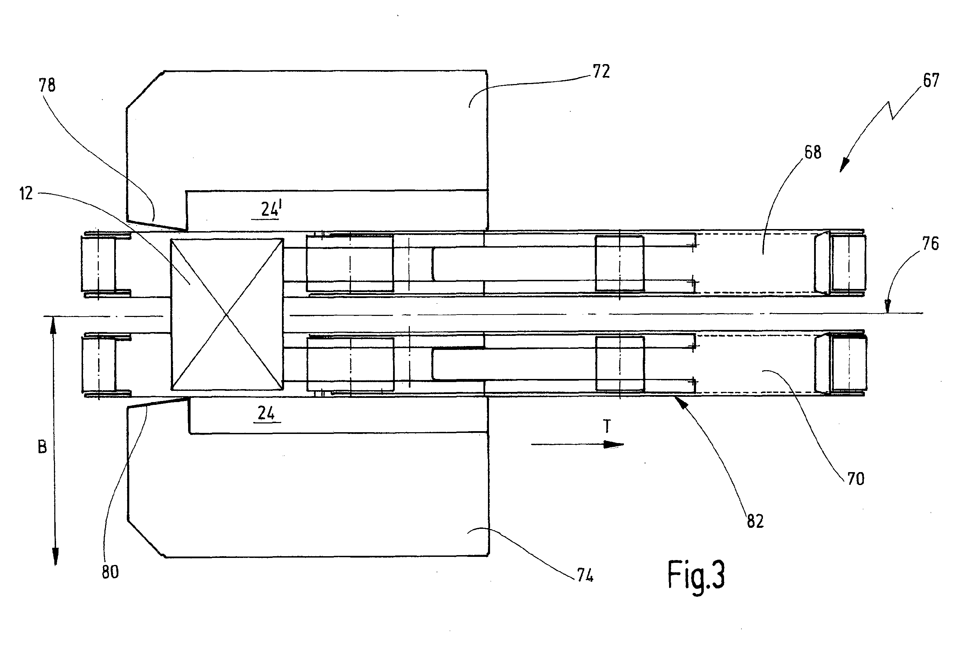

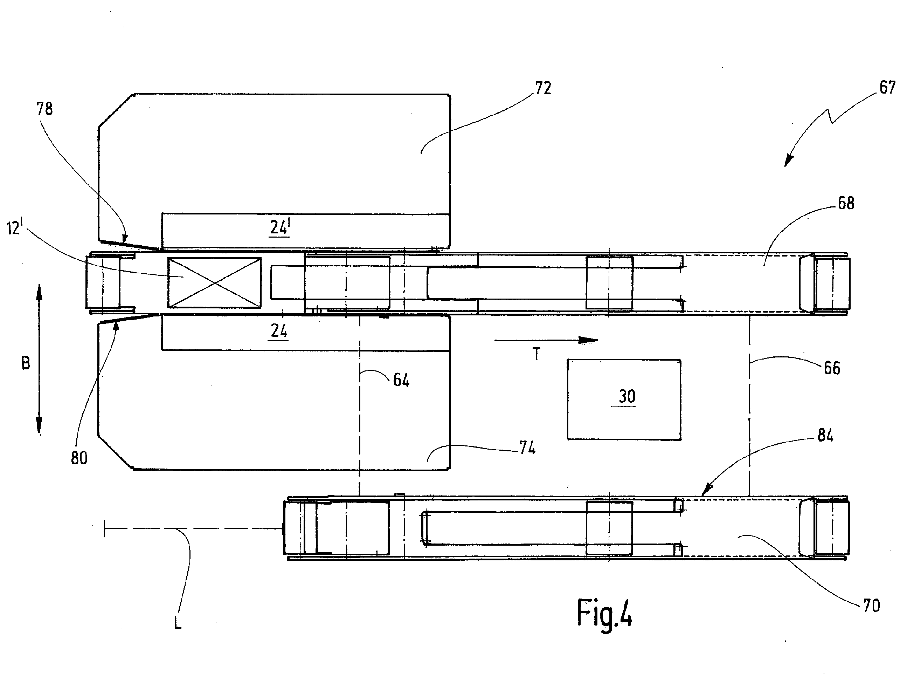

Das Plattenelement 36 lagert zudem zwei Schiebeführungen 64, 66, die dazu dienen, eine Transporteinrichtung für das Packgut 12 verschiebbar auszubilden. Dies wird im Folgenden mit Blick auf die Fig. 3 und 4 beschrieben.

Fig. 3 zeigt eine Transporteinrichtung 67, wie sie beispielsweise dazu verwendet wird, das Packgut 12 durch die Längsschweißeinrichtung 24 zu bewegen. Da es sich bei der Verpackungsmaschine 10 vorliegend um eine Serienpackmaschine handelt, sind zwei Längsschweißeinrichtungen 24, 24' vorgesehen, die zu beiden Längsseiten des Packguts 12 angeordnet sind.

Das Packgut 12 wird auf einem ersten Umlaufelement 68 und einem zweiten Umlaufelement 70 gefördert. Seitlich an das erste Umlaufelement 68 schließt sich eine erste Tragplatte 72 an, die die Längsschweißeinrichtung 24' trägt. Seitlich an das zweite Umlaufelement 70 schließt sich eine zweite Tragplatte 74 an, die die Längsschweißeinrichtung 24 trägt. Das erste Umlaufelement 68, das zweite Umlaufelement 70, die erste Tragplatte 72 und die zweite Tragplatte 74 sind symmetrisch zu einer Mittelebene 76 angeordnet. Wird eine Breitenposition B verstellt, um die Längsschweißeinrichtung 24, 24' an eine Breite des Packguts 12 anzupassen, bewegen sich die Umlaufelemente 68, 70 und die Tragplatten 72, 74 symmetrisch auf die Mittelebene 76 zu, um auf eine geringere Breite des Packguts 12 angepasst zu werden, bzw. symmetrisch von der Mittelebene 76 weg, um auf eine größere Breite des Packguts 12 angepasst zu werden.

An der ersten Tragplatte 72 kann etwa eine erste Führung 78 vorgesehen sein und an der zweiten Tragplatte 74 kann etwa eine zweite Führung 80 vorgesehen sein. Die erste Führung 78 und die zweite Führung 80 dienen dazu, das Packgut 12 sicher zwischen die Längsschweißeinrichtungen 24, 24' zu führen, wobei es seine Orientierungen beibehalten soll. Des Weiteren soll mittels der ersten Führung 78 und der zweiten Führung 80 vermieden werden, dass sich ein Packgut 12 an einem Einlauf zu den Längsschweißeinrichtungen 24, 24' verkantet und nicht weiter in die Transportrichtung T gefördert werden kann. In so einem Fall müsste die Verpackungsmaschine 10 angehalten werden, um den Stau des Packguts 12 zu beseitigen.

Die Fig. 3 zeigt das zweite Umlaufelement 70 in einer Betriebsposition 82. In dieser Betriebsposition 82 wird das Packgut 12 von sowohl dem ersten Umlaufelement 68 als auch dem zweiten Umlaufelement 70 gefördert. Diese Anordnung wird in der Regel für Packgüter normaler Breite gewählt.

In Fig. 4 ist das zweite Umlaufelement 70 in einer Parkposition 84 dargestellt. Die Parkposition 84 wird eingerichtet, um Packgüter 12' von geringerer Breite mit der Verpackungsmaschine 10 verpacken zu können.

Hierzu wird das zweite Umlaufelement 70 zunächst ineinandereingeschoben. Das zweite Umlaufelement 70 ist teleskopartig ausgebildet, so dass es durch Zusammenschieben um eine Teleskoplänge L verkürzt werden kann. Nachdem das zweite Umlaufelement 70 eingeschoben wurde, kann es auf den Schiebeführungen 64, 66, die in der Fig. 4 lediglich schematisch dargestellt sind, seitlich in die Parkposition 84 verschoben werden. Es kann des Weiteren vorgesehen sein, dass auch das erste Umlaufelement 68 ein Stück weit verschoben wird, damit es direkt in der Mittelebene 76 liegt. Es kann aber auch vorgesehen sein, dass das erste Umlaufelement 68 in seiner Position verbleibt. Die Längsschweißeinrichtungen 24, 24' werden dann zusammengeschoben, bis sie an dem ersten Umlaufelement 68 anliegen. Die Verpackungsmaschine 10 kann nun auch Verpackungsgüter 12' von geringerer Breite verarbeiten.

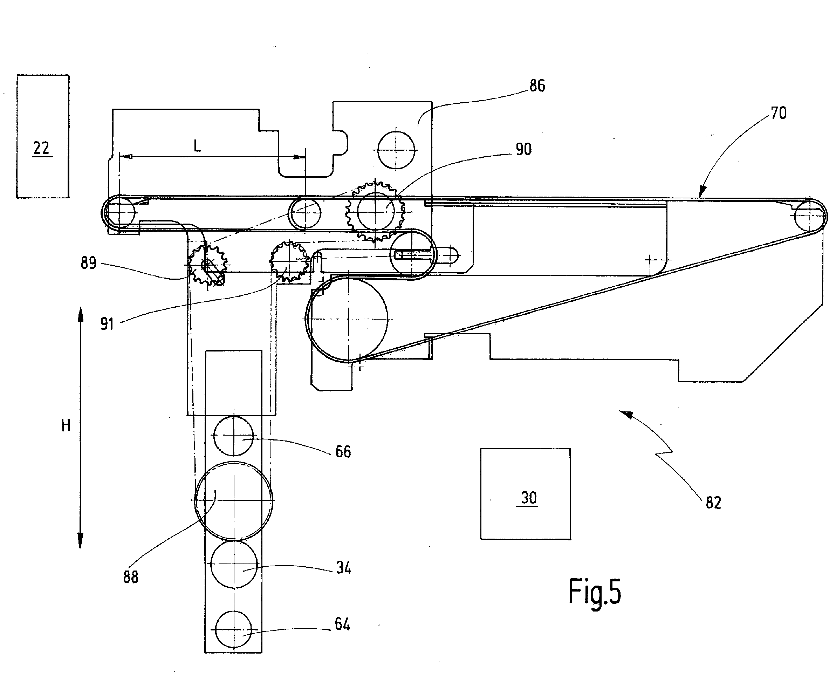

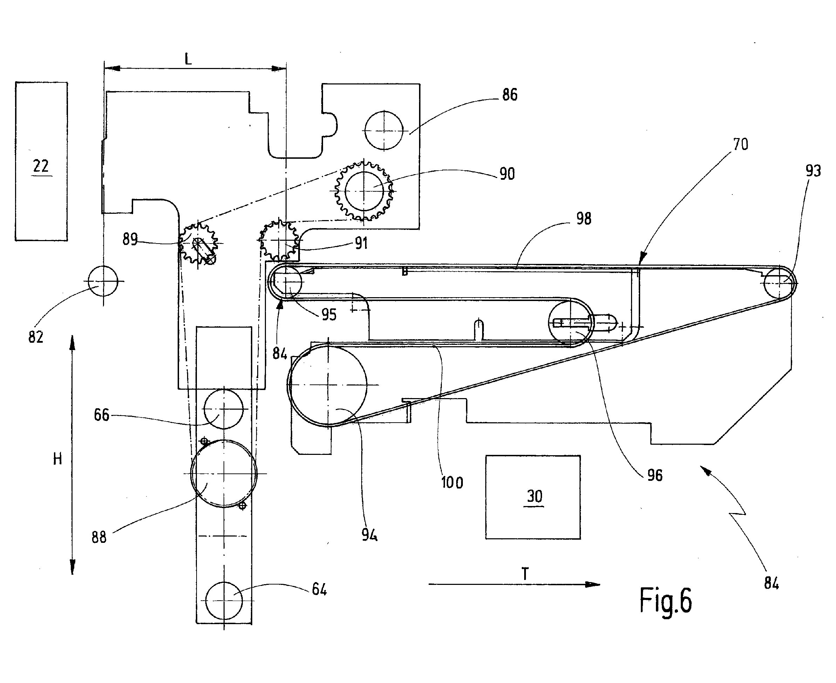

Fig. 5 zeigt eine Seitenansicht des zweiten Umlaufelements 70 in der Betriebsposition 82. Des Weiteren ist eine Halterung 86 dargestellt. Die Halterung 86 dient dazu, die Längschweißeinrichtung 24 zusammen mit der zweiten Tragplatte 74 zu halten und in der Höhenposition H verstellbar einzurichten. Die Halterung 86 trägt des Weiteren einen Kettentrieb 88 für die Längsschweißeinrichtung 24. Des Weiteren trägt die Halterung 86 Rollen 89, 90 und 91, die weitere Elemente des Kettentriebs 88 der Längsschweißeinrichtung 24 bilden. Durch die Halterung 86 sind des Weiteren auch die Schiebeführungen 64, 66 geführt, auf denen das zweite Umlaufelement 70 verschoben werden kann. Dazu ist das zweite Umlaufelement 70 auf einem geeigneten Schiebebock angeordnet, der jedoch in den Fig. 5 und 6 zur besseren Übersichtlichkeit nicht dargestellt ist.

Wie zu erkennen ist, kann das zweite Umlaufelement 70 in der in Fig. 5 dargestellten Position nicht seitlich an der Halterung 86 vorbei in die Parkposition 84 bewegt werden. Das Vorgehen, das ein Verbringen des zweiten Umlaufelements 70 von der Betriebsposition 82 in die Parkposition 84 ermöglicht, wird im Folgenden mit Blick auf die Fig. 6 beschrieben.

Um das zweite Umlaufelement 70 aus der Betriebsposition 82 in die Parkposition 84 verbringen zu können, müssen das zweite Umlaufelement 70 und die Halterung 86 in Positionen bewegt werden, die es ermöglichen, dass das zweite Umlaufelement 70 senkrecht zu der Transportrichtung T an der Halterung 86 vorbeibewegt werden kann.

Das zweite Umlaufelement 70 weist vier Rollen 93, 94, 95, 96 auf, über die das zweite Umlaufelement 70 umläuft. Dabei sind die Rollen 95 und 96 relativ zu den Rollen 93 und 94 verschiebbar, so dass das zweite Umlaufelement 70 teleskopartig in Richtung der Transportrichtung T ineinanderschiebbar ist. Die teleskopartige Ausgestaltung des zweiten Umlaufelements 70 ermöglicht es, dass die Rolle 95 aus ihrer Lage in der Betriebsposition 82 in eine andere Lage in der Parkposition 84 verschoben werden kann. In der Parkposition 84 kann die Rolle an der Halterung 86 vorbeigeschoben werden. Diese Vorschubrichtung steht dabei senkrecht auf der in Fig. 6 dargestellten Ansicht.

Des Weiteren wird die Halterung 86 vorher in ihrer Höhenposition H verstellt, so dass die Elemente der Längsschweißeinrichtung 24 angehoben werden. Insbesondere wird die Halterung 86 soweit angehoben, dass die Rolle 91 des Kettentriebs 88 sich oberhalb der Rolle 95 des zweiten Umlaufelements 70 befindet.

Auf diese Weise wird es möglich, das zweite Umlaufelement 70 an der Halterung 86 vorbei in die Parkposition 84 zu verbringen, wobei sich die Parkposition 84 dann außerhalb der Längsschweißeinrichtungen 24, 24' befindet. Innerhalb der Längsschweißeinrichtungen 24, 24' befindet sich dann lediglich noch das erste Umlaufelement 68.

Wird das zweite Umlaufelement 70 teleskopartig ineinandergeschoben, verändert sich selbstverständlich auch ein Abstand zwischen der Rolle 95 und der Rolle 93 des zweiten Umlaufelements 70. Somit würde sich zunächst die Umlauflänge des zweiten Umlaufelements 70 verringern, so dass dieses ungespannt durchhängen würde. Daher ist auch die Rolle 96 verschiebbar vorgesehen. Die Rolle 96 verschiebt sich dabei stets um dasselbe Maß wie auch die Rolle 95. Somit wird, wenn sich der Abstand zwischen den Rollen 93 und 95 verringert, ein Abstand zwischen den Rollen 94 und 96 vergrößert. Es ist somit vorgesehen, dass eine Verkürzung des zwischen den Rollen 93 und 95 aufgespannten Trums 98 sich ein zwischen den Rollen 94 und 96 aufgespannter weiterer Trum 100 um ein entsprechend gleiches Maß verlängert. Somit bleibt die Umlauflänge des zweiten Umlaufelements 70 gleich und das zweite Umlaufelement 70 sowohl in der Betriebsposition 82 als auch in der Parkposition 84 gespannt.

## Patentansprüche

1. Verpackungsmaschine (10) zum Verpacken eines Packguts (12) mit einer Umverpackung (14, 16), mit einer Transporteinrichtung (67) zum Fördern des Packguts (12) in einer Transportrichtung (T) und mindestens einer Längsschweißeinrichtung (24) zum Verschweißen der Umverpackung (14, 16) in der Transportrichtung (T), wobei eine Breitenposition (B) der Längsschweißeinrichtung (24) verstellbar ist, um eine Breite der Umverpackung (14, 16) einzustellen, **dadurch gekennzeichnet, dass**
eine Führung (78, 80) zum Führen des Packguts (12) vorgesehen ist und eine Höhenposition (H) der Längsschweißeinrichtung (24) verstellbar ist, wobei die Breitenposition (B) der Längsschweißeinrichtung (24) und eine Breitenposition (B) der Führung (78, 80) mittels einer gemeinsamen Betätigungseinrichtung (40) verstellbar sind, wobei die Betätigungseinrichtung (40) ein Endloselement (38) aufweist, das über ein Umlenkelement (54) geführt ist, und wobei eine Position des Umlenkelements (54) mit der Höhenposition (H) der Längsschweißeinrichtung (24) gekoppelt ist, wobei die Breitenposition (B) der Führung (78, 80) mittels einer ersten Spindel (32) und die Breitenposition (B) der Längsschweißeinrichtung (24) mittels einer zweiten Spindel (34) verstellbar ist, wobei das Endloselement (38) die erste Spindel (32) und die zweite Spindel (34) verbindet, und wobei die Position des Umlenkelements (54) mit der Höhenposition (H) der Längsschweißeinrichtung (24) mittels eines L-förmigen Hebels (48) mechanisch gekoppelt ist.

2. Verpackungsmaschine nach Anspruch 1, **dadurch gekennzeichnet, dass** die Betätigungseinrichtung (40) ein manuell betätigbares Kurbelelement (42) und/oder einen Antrieb zur Betätigung der ersten Spindel (32) und der zweiten Spindel (34) aufweist.

3. Verpackungsmaschine nach Anspruch 1 oder 2, **dadurch gekennzeichnet, dass** das Endloselement (38) über die erste Spindel (32), die zweite Spindel (34), ein erstes Paar von Umlenkrollen (55, 56) und ein zweites Paar von Umlenkrollen (59, 60) U-förmig umläuft, wobei das erste Paar von Umlenkrollen (55, 56) das eine Umlenkelement (54) bildet, und die Position des ersten Paars von Umlenkrollen (55, 56) mit der Höhenposition (H) der Längsschweißeinrichtung (24) gekoppelt ist.

4. Verpackungsmaschine nach Anspruch 3, **dadurch gekennzeichnet, dass** das zweite Paar von Umlenkrollen (59, 60) in seiner Position festgelegt ist.

5. Verpackungsmaschine nach einem der Ansprüche 1 bis 4, **dadurch gekennzeichnet, dass** die Transporteinrichtung (67) ein erstes Umlaufelement (68) und mindestens ein zweites Umlaufelement (70) aufweist, wobei das zweite Umlaufelement (70) aus einer Betriebsposition (82) in eine Parkposition (84) bewegbar ist, so dass das Packgut (12) in der Betriebsposition (82) von sowohl dem ersten (68) als auch dem mindestens einen zweiten (70) Umlaufelement gefördert ist und in der Parkposition (84) das Packgut (12) lediglich von dem ersten Umlaufelement (68) gefördert ist.

6. Verpackungsmaschine nach Anspruch 5, **dadurch gekennzeichnet, dass** das zweite Umlaufelement (70) teleskopartig ausgebildet ist.

7. Verpackungsmaschine nach Anspruch 6, **dadurch gekennzeichnet, dass** das zweite Umlaufelement (70) über mindestens vier Rollenelemente (93, 94, 95, 96) geführt ist, wobei mindestens zwei (95, 96) der mindestens vier Rollenelemente (93, 94, 95, 96) gemeinsam verschiebbar sind, so dass eine Verkürzung eines Trums (98) des zweiten Umlaufelements (70) eine Verlängerung eines weiteren Trums (100) des zweiten Umlaufelements (70) bewirkt.

8. Verpackungsmaschine nach einem der Ansprüche 5 bis 7, **dadurch gekennzeichnet, dass** zwei Längsschweißeinrichtungen (24, 24') vorgesehen sind und das zweite Umlaufelement (70) senkrecht zu der Transportrichtung (T) aus der Betriebsposition (82) in die Parkposition (84) bewegbar ist, wobei die Betriebsposition (82) innerhalb der zwei Längschweißeinrichtungen (24, 24') angeordnet ist und die Parkposition (84) außerhalb der zwei Längsschweißeinrichtungen (24, 24') angeordnet ist.

## Claims

1. Packaging machine (10) for packaging an article (12) with outer packaging (14, 16), with a transporting device (67), for conveying the article (12) in the transporting direction (T), and with at least one longitudinal-welding device (24), for welding the outer packaging (14, 16) in the transporting direction (T), wherein a width position (B) of the longitudinal-welding device (24) can be adjusted in order to set a width of the outer packaging (14, 16), **characterized in that**
a guide (78, 80) is provided for guiding the article (12) and it is possible to adjust a height position (H) of the longitudinal-welding device (24), wherein the width position (B) of the longitudinal-welding device (24) and a width position (B) of the guide (78, 80) can be adjusted by means of a common actuating device (40), wherein the actuating device (40) has an endless element (38) which is guided over a deflecting element (54), and wherein a position of the deflecting element (54) is coupled to the height position (H) of the longitudinal welding device (24), wherein the width position (B) of the guide (78, 80) can be adjusted by means of a first spindle (32) and the width position (B) of the longitudinal-welding device (24) can be adjusted by means of a second spindle (34), wherein the endless element (38) connects the first spindle (32) and the second spindle (34), and wherein the position of the deflecting element (54) is coupled mechanically to the height position (H) of the longitudinal-welding device (24) by means of an L-shaped lever (48).

2. Packaging machine according to Claim 1, **characterized in that** the actuating device (40) has a manually actuable crank element (42) and/or a drive for actuating the first spindle (32) and the second spindle (34).

3. Packaging machine according to Claim 1 or 2, **characterized in that** the endless element (38) circulates in a U-shaped manner over the first spindle (32), the second spindle (34), a first pair of deflecting rollers (55, 56) and a second pair of deflecting rollers (59, 60), wherein the first pair of deflecting rollers (55, 56) forms the deflecting element (54), and the position of the first pair of deflecting rollers (55, 56) is coupled to the height position (H) of the longitudinal-welding device (24).

4. Packaging machine according to Claim 3, **characterized in that** the second pair of deflecting rollers (59, 60) is secured in its position.

5. Packaging machine according to one of Claims 1 to 4, **characterized in that** the transporting device (67) has a first circulating element (68) and at least one second circulating element (70), wherein the second circulating element (70) can be moved out of an operating position (82) into a parked position (84), and therefore the article (12), in the operating position (82), is conveyed by both the first (68) and the at least one second (70) circulating element and, in the parked position (84), the article (12) is conveyed merely by the first circulating element (68).

6. Packaging machine according to Claim 5, **characterized in that** the second circulating element (70) is of telescopic design.

7. Packaging machine according to Claim 6, **characterized in that** the second circulating element (70) is guided over at least four roller elements (93, 94, 95, 96), wherein at least two (95, 96) of the at least four roller elements (93, 94, 95, 96) can be displaced together, and therefore shortening of one strand (98) of the second circulating element (70) causes a further strand (100) of the second circulating element (70) to be lengthened.

8. Packaging machine according to one of Claims 5 to 7, **characterized in that** two longitudinal-welding devices (24, 24') are provided and the second circulating element (70) can be moved out of the operating position (82) into the parked position (84) perpendicularly to the transporting direction (T), wherein the operating position (82) is arranged within the two longitudinal-welding devices (24, 24') and the parked position (84) is arranged outside the two longitudinal-welding devices (24, 24').

## Revendications

1. Machine d'emballage (10) pour emballer un produit à emballer (12) avec un emballage (14, 16), comprenant un dispositif de transport (67) pour transporter le produit à emballer (12) dans une direction de transport (T) et au moins un dispositif de soudage longitudinal (24) pour souder l'emballage (14, 16) dans la direction de transport (T), la position en largeur (B) du dispositif de soudage longitudinal (24) pouvant être réglée, afin d'ajuster une largeur de l'emballage (14, 16), **caractérisée en ce qu'**
un guide (78, 80) est prévu pour guider le produit à emballer (12) et une position en hauteur (H) du dispositif de soudage longitudinal (24) est réglable, la position en largeur (B) du dispositif de soudage longitudinal (24) et une position en largeur (B) du guide (78, 80) étant réglables au moyen d'un dispositif de commande commun (40), le dispositif de commande (40) présentant un élément sans fin (38) qui est guidé sur un élément de renvoi (54) et une position de l'élément de renvoi (54) étant accouplée à la position en hauteur (H) du dispositif de soudage longitudinal (24), la position en largeur (B) du guide (78, 80) étant réglable au moyen d'une première broche (32) et la position en largeur (B) du dispositif de soudage longitudinal (24) étant réglable au moyen d'une deuxième broche (34), l'élément sans fin (38) reliant la première broche (32) et la deuxième broche (34), et la position de l'élément de renvoi (54) étant accouplée mécaniquement à la position en hauteur (H) du dispositif de soudage longitudinal (24) au moyen d'un levier en forme de L (48).

2. Machine d'emballage selon la revendication 1, **caractérisée en ce que** le dispositif de commande (40) présente un élément de manivelle à commande manuelle (42) et/ou un entraînement pour la commande de la première broche (32) et de la deuxième broche (34).

3. Machine d'emballage selon la revendication 1 ou 2, **caractérisée en ce que** l'élément sans fin (38) tourne en forme de U sur la première broche (32), la deuxième broche (34), une première paire de poulies de renvoi (55, 56) et une deuxième paire de poulies de renvoi (59, 60), la première paire de poulies de renvoi (55, 56) formant ledit un élément de renvoi (54), et la position de la première paire de poulies de renvoi (55, 56) étant accouplée à la position en hauteur (H) du dispositif de soudage longitudinal (24).

4. Machine d'emballage selon la revendication 3, **caractérisée en ce que** la deuxième paire de poulies de renvoi (59, 60) est fixée en position.

5. Machine d'emballage selon l'une quelconque des revendications 1 à 4, **caractérisée en ce que** le dispositif de transport (67) présente un premier élément périphérique (68) et au moins un deuxième élément périphérique (70), le deuxième élément périphérique (70) pouvant être déplacé depuis une position de travail (82) dans une position d'arrêt (84), de telle sorte que le produit à emballer (12) soit transporté dans la position de travail (82) à la fois par le premier (68) et par l'au moins un deuxième (70) élément périphérique et que le produit à emballer (12), dans la position d'arrêt (84), soit seulement transporté par le premier élément périphérique (68).

6. Machine d'emballage selon la revendication 5, **caractérisée en ce que** le deuxième élément périphérique (70) est réalisé sous forme télescopique.

7. Machine d'emballage selon la revendication 6, **caractérisée en ce que** le deuxième élément périphérique (70) est guidé sur au moins quatre éléments de poulie (93, 94, 95, 96), au moins deux (95, 96) des au moins quatre éléments de poulie (93, 94, 95, 96) pouvant être déplacés en commun de telle sorte qu'un raccourcissement du tronçon (98) du deuxième élément périphérique (70) provoque un allongement d'un autre tronçon (100) du deuxième élément périphérique (70).

8. Machine d'emballage selon l'une quelconque des revendications 5 à 7, **caractérisée en ce que** deux dispositifs de soudage longitudinal (24, 24') sont prévus et le deuxième élément périphérique (70) peut être déplacé perpendiculairement à la direction de transport (T) de la position de travail (82) dans la position d'arrêt (84), la position de travail (82) étant disposée à l'intérieur des deux dispositifs de soudage longitudinal (24, 24') et la position d'arrêt (84) étant disposée à l'extérieur des deux dispositifs de soudage longitudinal (24, 24').
